Europäisches Patentamt

European Patent Office

Office européen des brevets

(19)

(11) Veröffentlichungsnummer: **0 207 535 B1**

(12) **EUROPÄISCHE PATENTSCHRIFT**

(45) Veröffentlichungstag der Patentschrift:
**17.11.88**

(21) Anmeldenummer: **86200874.5**

(22) Anmeldetag: **21.05.86**

(51) Int. Cl.⁴: **H 02 K 21/08,** H 02 K 21/18

(54) **Einphasensynchronmotor mit einem zweipoligen, dauermagnetisch erregten Rotor.**

(30) Priorität: **24.05.85 DE 3518694**

(43) Veröffentlichungstag der Anmeldung:
**07.01.87 Patentblatt 87/2**

(45) Bekanntmachung des Hinweises auf die Patenterteilung:
**17.11.88 Patentblatt 88/46**

(84) Benannte Vertragsstaaten:
**CH DE FR GB IT LI**

(56) Entgegenhaltungen:
**CH - A - 81 833
DE - A - 2 918 655
DE - A - 3 142 835
DE - C - 1 043 488
FR - A - 705 712
GB - A - 2 071 429
US - A - 2 488 729
US - A - 2 601 517**

(73) Patentinhaber: **Philips Patentverwaitung GmbH,
Wendenstrasse 35 Postfach 10 51 49,
D-2000 Hamburg 1 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **CH FR GB IT LI**

(72) Erfinder: **Bertram, Leo, Am Sender 10, D-5190 Stolberg
(DE)**
Erfinder: **Schemmann, Hugo, Dr., Zwartebergweg 6,
NL-6371 XD Schaesberg (NL)**

(74) Vertreter: **Kupfermann, Fritz-Joachim, Dipl.-Ing. et al,
Philips Patentverwaitung GmbH
Wendenstrasse 35 Postfach 10 51 49,
D-2000 Hamburg 1 (DE)**

**Beschreibung**

Die Erfindung bezieht sich auf einen Einphasensynchronmotor mit einem zweipoligen, dauermagnetisch erregten Rotor und einem die Statorspulen tragenden Statoreisen, das zusammen mit den Spulen zwischen den Statorpolen ein zweipoliges Statorfeld ausbildet.

Aus der Zeitschrift ETZ, Band 30, 1978, Heft 2, Seiten 56 bis 60, und der DE-A-3 215 376 ist ein Einphasensynchronmotor mit dauermagnetischem Läufer bekannt. Der zylindrisch ausgebildete dauermagnetische Rotor ist dabei diametral, parallel magnetisiert. Auf das U-förmige Statoreisen sind die Magnetisierungsspulen aufgeschoben. Zwischen den Statorpolen bildet sich ein zweipoliges Statorfeld aus. Bei dem Rotor dieses Motors sind die inneren Feldlinien derart gekrümmt, dass sich Pole mit höherer Felddichte ausbilden, wobei die beiden einander gegenüberliegenden Polflächen je auf einen Winkelbereich der Läuferumfangsfläche in der Grössenordnung von 65° beschränkt sind. Auf diese Weise entstehen konzentrierte Magnetpole, die den Rotor verstärkt in Richtung des kleinsten Luftspaltes zwischen dem Rotor und dem unsymmetrischen Stator drehen.

Aus wirtschaftlichen Gründen kann es günstig sein, auf einen symmetrischen Eisenkern dauermagnetische Magnetkörper mit Abstand voneinander aufzubringen (Aufsatz des Herrn Karl Ruschmeyer, Motoren und Generatoren mit Dauermagneten, Band 123, Kontakte und Studium, herausgegeben von Prof. Dr.-Ing. Wilfried J. Bartz, Expert-Verlag, 1983, Seiten 36 und 37). Die bekannten Einphasensynchronmotoren, beschrieben in ETZ, Band 30, müssen zum Selbstanlauf eine bestimmte Bedingung erfüllen. Diese bestimmte Bedingung besteht darin, dass sich der Läufer beim Abschalten des Motors in eine bestimmte Richtung gegenüber den Statorpolen dreht. Dieses in die bestimmte Lage Ziehen wird bewirkt durch das sogenannte Klebemoment. Zu definieren ist dabei noch ein Asymmetriewinkel, der sich durch Motorausbildung ergibt zwischen der Stellung des Rotorfeldes und des Statorfeldes bei Motorstillstand.

Aus der DE-B-1 261 235 ist es bekannt, den Rotor eines Synchronkleinstmotors aus zwei dauermagnetischen Teilen aufzubauen, zwischen denen sich ein dünnes Blech befindet. Dieser Rotor hat zylinderförmige Mantelflächenanteile und ist im Bereich des dünnen Bleches abgeflacht. Ein Einphasensynchronmotor mit einer derartigen zylindrischen Anordnung läuft schlecht an, weil der mit dieser zylindrischen Anordnung erreichbare Asymmetriewinkel relativ klein ist.

Es ist Aufgabe der Erfindung, den Asymmetriewinkel zu vergrössern, um bei der angehängten Last grössere Reibungsmomente im Augenblick des Anlaufs überwinden zu können.

Die gestellte Aufgabe ist erfindungsgemäss dadurch gelöst, dass

— der Rotor aus einem weichmagnetischen Mittelteil und beiderseits daran angeordneten hartmagnetischen Magnetkörpern besteht,

— die Mantelfläche des Rotors im Bereich der Magnetkörper von der Zylinderform abweicht,

— die grösste Ausdehnung des Magnetkörpers parallel zur Magnetisierungsrichtung im Bereich der durch die Rotorachse verlaufenden Mittelebene parallel zur Magnetisierungsrichtung verläuft, die senkrecht zur Motormaterialschichtung aus weich- und hartmagnetischem Material verläuft.

Ein derartig ausgebildeter Motor ist in der Lage, gegen eine grössere Reibung der angehängten Last anzulaufen.

Nach einer weiteren Ausgestaltung der Erfindung ist vorgesehen, dass die Mantelfläche im Bereich der Dauermagneten symmetrisch zur Mittelebene dachförmig abfällt. Eine derartige Dachform der Mantelfläche ist fertigungstechnisch einfach herzustellen.

Nach einer weiteren Ausgestaltung der Erfindung ist vorgesehen, dass die Dachform der Mantelfläche im Bereich der Dauermagneten durch die Schichtung von Blöcken aus hartmagnetischem Material angenähert ist. Auch hierdurch ergeben sich Fertigungserleichterungen.

Die Erfindung wird anhand des in der Zeichnung dargestellten Ausführungsbeispieles näher erläutert. Es zeigen:

Fig. 1 einen Einphasensynchronmotor aus weich- und hartmagnetischen Materialien geschichtetem Rotor,

Fig. 2 und 3 abgewandelte Formen des geschichteten Rotors mit geschichteten Magnetsegmenten.

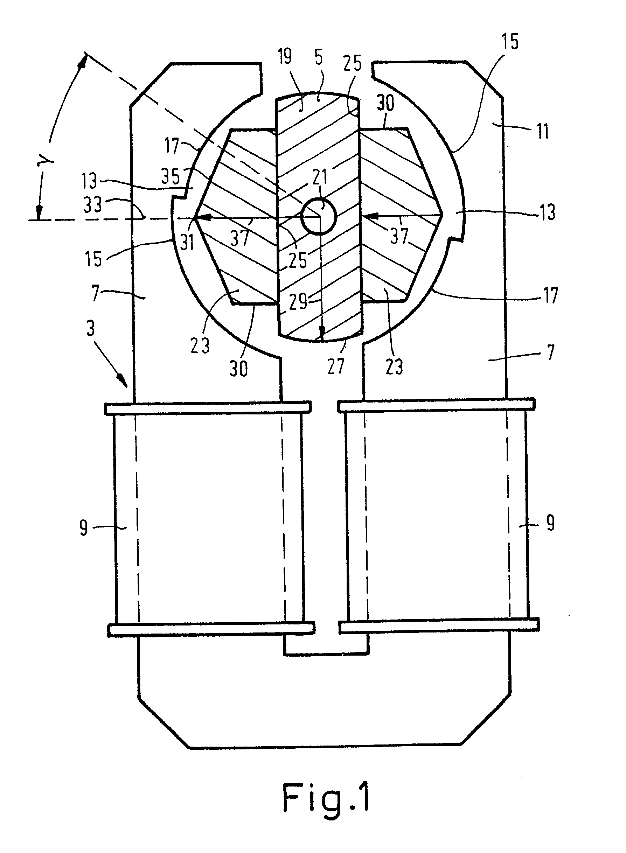

Der in Fig. 1 dargestellte Einphasensynchronmotor weist ein U-förmiges Statoreisen 3, einen Rotor 5 und auf die Schenkel 7 des Statoreisens 3 aufgeschobene Erregerspulen 9 auf. Im Bereich der Schenkelenden 11 ist das Statoreisen mit bogenförmigen Polen 13 versehen, innerhalb der der Rotor 5 umläuft. Die Pole 13 bestehen aus Polbogenteilen 15 und 17 grösseren bzw. kleineren Durchmessers.

Der Rotor 5 besteht im ausgeführten Beispiel aus einem weichmagnetischen blockförmigen Mittelteil 19, durch das sich die Rotorwelle 21 erstreckt. Auf das weichmagnetische Mittelteil 19 sind beiderseits auf Seitenflächen 22, vorzugsweise durch Aufkleben, Dauermagnete 23 aufgebracht. Die Trennebenen 25 zwischen dem weichmagnetischen Mittelteil 19 und den Magneten 23 verlaufen parallel zueinander.

Die Dauermagnete beiderseits des Mittelteils 19 sind längs der Trennebene 25 zurück versetzt. Das Mittelteil 19 des Rotors mit der Mantelfläche 27 und deren Radius 29 steht damit vor, und die radial zurückversetzten Flächen 30 des Rotors springen zurück. Senkrecht zu den Trennebenen 25 sind die Dauermagnete 23 auf der von dem Mittelteil 19 abliegenden Seiten an der Mantelfläche dachförmig ausgebildet. Die sich daraus ergebenden Firstlinien 31 fallen in eine Mittelebene 33 des Rotors. Die Magnetisierung der Dauermagnete 23 verläuft gleichsinnig von einer dachförmigen Fläche 35 zur gegenüberliegenden dachförmigen Fläche 35 und ist durch Pfeile 37 angedeutet.

Bei diesem Rotoraufbau ergibt sich eine Feldkonzentration in Richtung der Mittelebene 33. Im Leerlauf verstellt sich der Rotor 5 von sich aus um einen

Winkel γ in Richtung einer Mittelebene 39 aufgrund des Klebemomentes.

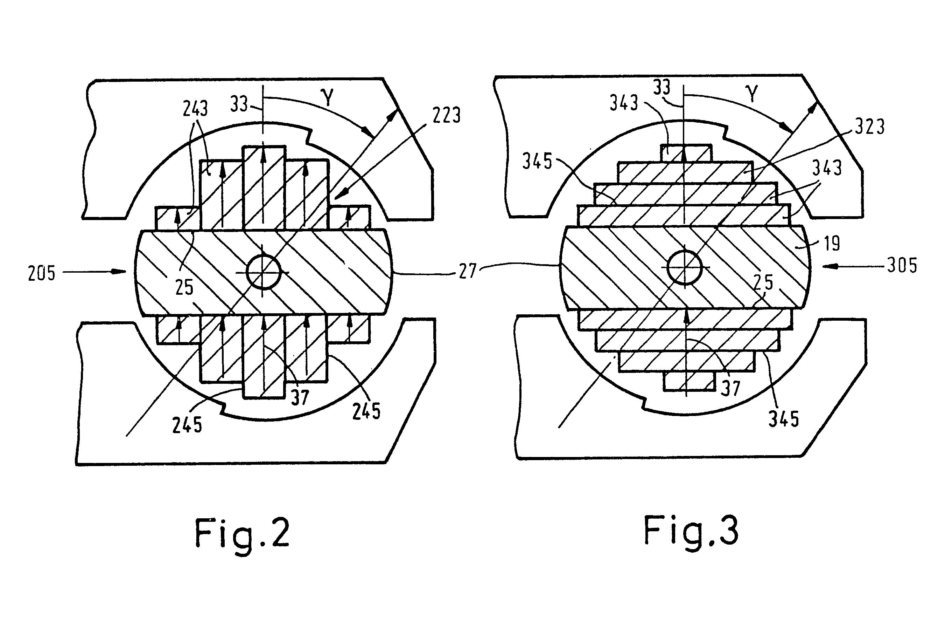

Die Fig. 2 und 3 zeigen Rotoren 205 und 305, die wieder ein weichmagnetisches Mittelteil 27 aufweisen, wie in Fig. 1. Die Dauermagnete 223 und 323 sind jedoch anders aufgebaut. Bei Fig. 2 bestehen sie aus platten- oder stabförmigen Magneten 243, deren Höhe senkrecht zu den Trennebenen 25 von der Mantelfläche 27 des Mittelteiles an zunimmt bis in den Bereich der Mittelebene 33 und danach wieder abnimmt. Dieser Aufbau ergibt sich, wenn die Magnetplatten 243, die senkrecht zu dem Mittelteil 19 und den Trennebenen 25 magnetisiert sind, längs Ebenen 245 zusammengesetzt werden, die senkrecht zu den Trennebenen 25 verlaufen. Dieser Aufbau nach Fig. 2 ist bei der Darstellung des Rotors nach Fig. 3 geändert, indem die Magnetplatten 343 längs Trennebenen 345 aufeinander geschichtet sind, die parallel zu den Trennebenen 25 verlaufen. In diesem Fall wird die Längsausdehnung der Magnetplatten 243 vom Mittelteil 19 an von Platte zu Platte verringert. Die schmalste Platte 343' befindet sich dabei im Bereich 0. Auch bei den Rotoren nach Fig. 2 und 3 verläuft die Magnetisierung senkrecht zu den Trennebenen 25.

Bei allen drei Ausführungsbeispielen gilt, dass die Mantelfläche des Rotors im Bereich der Mittelebene 33 längs des Umfanges von der Zylinderform abweicht. Die Ausdehnung in Magnetisierungsrichtung parallel zur Mittelebene 33 ist dabei im Bereich der Mittelebene 33 am grössten.

## Patentansprüche

1. Einphasensynchronmotor mit einem zweipoligen, dauermagnetisch erregten Rotor (5) und einem die Statorspulen (9) tragenden Statoreisen (3), das zusammen mit den Spulen zwischen den Statorpolen ein zweipoliges Statorfeld ausbildet, dadurch gekennzeichnet, dass
— der Rotor (5, 205, 305) aus einem weichmagnetischen Mittelteil (19) und beiderseits daran angeordneten hartmagnetischen Magnetkörpern (23, 223, 323) besteht,
— die Mantelfläche des Rotors (5) im Bereich der Magnetkörper (23, 223, 323) von der Zylinderform abweicht,
— die grösste Ausdehnung des Magnetkörpers parallel zur Magnetisierungsrichtung im Bereich der durch die Rotorachse (21) verlaufenden Mittelebene (33) parallel zur Magnetisierungsrichtung verläuft, die senkrecht zur Rotormaterialschichtung aus weich- und hartmagnetischem Material verläuft.

2. Einphasensynchronmotor nach Anspruch 1, dadurch gekennzeichnet, dass die Mantelfläche (27) symmetrisch zur Mittelebene (33) dachförmig abfällt.

3. Einphasensynchronmotor nach den Ansprüchen 1 und 2, dadurch gekennzeichnet, dass die Dachform der Mantelfläche durch die Schichtung von Körpern (243, 343) aus hartmagnetischem Material angenähert ist.

## Claims

1. A single-phase synchronous motor comprising a two-pole permanent-magnet excited rotor (5) and a stator iron (3) which carries the stator coils (9) and which together with the coils produces a two-pole stator field between the stator poles, characterized in that
— the rotor (5, 205, 305) comprises a soft-magnetic central part (19) and hard-magnetic magnet bodies (23, 223, 323) arranged on opposite sides of said central part,
— the peripheral surface of the rotor (5) has a shape which deviates from a cylindrical shape at the location of the magnet bodies (23, 223, 323),
— the largest dimension of the magnet body parallel to the direction of magnetization at the location of the median plane (33) through the rotor shaft (21) extends parallel to the direction of magnetization which extends perpendicularly to the rotor-material lamination of hard-magnetic and soft-magnetic materials.

2. A single-phase synchronous motor as claimed in Claim 1, characterized in that the peripheral surface (27) is inclined symmetrically relative to the median plane (33) so it is roof-shaped at the location of the permanent magnets.

3. A single-phase synchronous motor as claimed in Claims 1 and 2, characterized in that the roof-shape of the peripheral surface is approximated by superposing blocks (243, 343) of a hard-magnetic material.

## Revendications

1. Moteur synchrone monophasé muni d'un rotor bipolaire (5) à excitation à aimants permanents et d'un fer statorique (3) portant les bobines statoriques (9) et qui, conjointement avec les bobines, engendre un champ statorique bipolaire entre les pôles statoriques, caractérisé en ce que
— le rotor (5, 205, 305) est constitué par une partie centrale magnétique douce (19) et des corps magnétiques durs (23, 223, 323) disposés de part et d'autre de cette partie centrale,
— la surface périphérique du rotor (5) diffère de la forme cylindrique à l'endroit des corps magnétiques (23, 223, 323),
— la plus grande dimension du corps magnétiques s'étend parallèlement à la direction d'aimantation à l'endroit du plan médian (33) traversant l'axe de rotor (21) et parallèle à la direction d'aimantation, qui est perpendiculaire à la structure feuilletée du moteur constituée par des matériaux magnétiques doux et dur.

2. Moteur synchrone monophasé selon la revendication 1, caractérisé en ce qu'à l'endroit des aimants permanents, la surface cylindrique (27) est inclinée symétriquement par rapport au plan médian (33) de façon à présenter une forme de toit.

3. Moteur synchrone monophasé selon les revendications 1 et 2, caractérisé en ce que la forme de toit de la surface périphérique est approchée par la superposition de corps (243, 343) en matériau magnétique dur.

**Fig.1**

Fig.2

Fig.3

0 207 535